# EUROPEAN PATENT SPECIFICATION

(11) **EP 3 355 711 B1**
(45) Date of publication and mention of the grant of the patent: **23.10.2019**
(21) Application number: 16785371.2
(22) Date of filing: 29.09.2016
(51) Int. Cl.: A23G 9/22, A23G 9/28

(54) **CUTTING ARRANGEMENT FOR ICE CREAM MACHINE AND METHOD FOR CUTTING ICE CREAM**
SCHNEIDANORDNUNG FÜR SPEISEEISMASCHINE UND VERFAHREN ZUM SCHNEIDEN VON SPEISEEIS
AGENCEMENT DE COUPE POUR MACHINE À CRÈME GLACÉE ET PROCÉDÉ DE COUPE DE CRÈME GLACÉE

(30) Priority: 01.10.2015 DK 201570621
(43) Date of publication of application: 08.08.2018
(73) Proprietor: Tetra Laval Holdings & Finance S.A., 1009 Pully (CH)
(72) Inventor: ANDERSEN, Kenneth, 8370 Hadsten (DK)
(74) Representative: Tetra Pak - Patent Attorneys SE
(86) International application number: PCT/EP2016/073200
(87) International publication number: WO 2017/055406

(56) References cited:
- WO-A1-03/053154
- GB-A- 656 221
- GB-A- 742 644
- US-A- 3 822 623
- US-A- 3 981 660
- US-A- 4 201 112
- US-A- 4 851 247
- US-A1- 2007 199 423

## Description

### Technical field

The present invention is strictly defined by the claims and relates to a cutting arrangement for an ice cream machine, an ice cream machine comprising the cutting arrangement and a method for cutting ice cream using the ice cream machine comprising the cutting arrangement.

### Background art

In the ice cream industry ice cream, or an ice cream mixture, is used to produce ice cream products. In the process, the ice cream is extruded through an extrusion nozzle and subsequently cut into ice cream products by means of a cutting tool. The cutting tool may e.g. be a knife, a scrape or a hot wire, as in a heated electrical wire. Additionally, an ice cream stick is often inserted into the ice cream to produce so called ice cream lollies. Thereafter, the ice cream products can be put on a conveyer tray or a conveyer belt for further transportation to e.g. further processing, packaging and storing.

The cutting tool is typically actuated by mechanisms such as pneumatics or crank shafts, the crank shaft versions may be directly connected to the conveyer. Hence, the speed of the conveyer may be utilized to control the speed, i.e. frequency of the cutting strokes. Even though the speed, i.e. frequency of the cutting strokes may be decoupled from the conveyer speed in e.g. the pneumatic solution, the currently used mechanisms have a large amount of inertia. The large inertia implies that a precise control is hard to achieve in a cost-effective manner.

Further, the currently used mechanisms for driving the cutting tool are not possible to adapt to different ice cream products without stopping the conveyer and resetting and/or manually adjusting the mechanism and/or the cutting tool.

There is thus a need for improving the state of the art to provide a cutting arrangement, and an ice cream machine with a cutting arrangement which at least partly solves these problems.

Some relevant prior art is reflected by patent documents GB656221A, WO03/053154A1, US4201112A, US3981660A and US4851247A.

### Summary of the invention

It is an object of the present invention to improve the current state of the art, to solve at least some of the above problems. These and other objects are achieved by a cutting arrangement for an ice cream machine.

According to a first aspect of the present invention, a cutting arrangement for an ice cream machine is provided. The cutting arrangement comprises a cutting tool, and
an electrical actuator connected to and supporting the cutting tool, the electrical actuator being arranged to generate a reciprocating movement of the cutting tool in order for the cutting tool to cut ice cream into ice cream products.

The present invention is based on the realization that by providing an electrical actuator which controls the movement of the cutting tool, the cutting stroke may be optimized for the ice cream product which is to be produced. In other words, the length, speed and profile of the cutting stroke may be precisely controlled utilizing an electrical actuator. For example, in the prior known solutions the length of the cutting stroke is fixed. With the present invention, there is no need for mechanical adjustments, or different cutters depending on the type of ice cream product which is to be cut by the cutting arrangement. The electrical actuator may be precisely controlled by electrical signals. Thus, the same cutting arrangement may be used for a large amount of various ice cream products. Further, a cutting arrangement according to the present invention is very robust and has low cost due to the low number of parts. Hence, the assembly and installation time is also reduced compared to the prior solutions.

According to the invention, the cutting arrangement comprises a rotatable element arranged between the cutting tool and the electrical actuator, and the cutting arrangement further comprises a tilt actuator operatively connected to the rotatable element for tilting the cutting tool. By tilting the cutting tool, preferably away from an extrusion nozzle during the cutting procedure in which the extrusion nozzle extrudes the ice cream mixture which the cutting tool cuts, it may be possible to ensure that ice cream products are only cut during one part, e.g. the extending or
retracting part of the reciprocating movement generated by the electrical actuator. Hence, after the extending or retracting movement, the tilt actuator is actuated to tilt and ensure that the cutting tool is sufficiently spaced apart from other component, e.g. an extrusion nozzle, such that no ice cream is cut. Further, this may ensure that the ice cream mixture does not stick on the cutting tool. Thereby, an ice cream mixture may be continuously extruded through the extrusion nozzle.

In various exemplary embodiments the rotatable element may be elongated such that the cutting tool may be mounted parallel in, and spaced apart, from the axis of the reciprocating movement of the electrical actuator. Hence, the rotatable element may be a shaft or an elongated support element.

In at least one exemplary embodiment, the tilt actuator comprises an actuating rod, wherein the actuating rod is operatively connected to the rotatable element. The tilt actuator may thus rotate the rotatable element by a reciprocating movement of the actuating rod. According to at least one example embodiment, the actuating rod is directly connected to the rotatable element.

In at least one exemplary embodiment, the tilt actuator is a pneumatically driven tilt actuator. The actuation of the pneumatics may be provided by a solenoid valve or the like. According to at least one alternative example embodiment, the tilt actuator is electrically driven by a small linear servo motor.

In at least one exemplary embodiment, the electrical actuator comprises a main driving shaft, and further comprising at least one guiding shaft arranged in parallel with the main driving shaft for preventing at least rotational movement about the main driving shaft. The guiding shaft may also be arranged to support a portion of the weight which is carried by the main driving shaft. That the guiding shaft(s) are arranged in parallel with the main driving shaft means that the guiding shaft has an operative movement which is parallel to the movement of the main driving shaft.

In at least one exemplary embodiment, the cutting arrangement further comprises a control unit for controlling the reciprocating movement of the electrical actuator and/or the tilt actuator. The control unit may comprise a microprocessor with thereupon stored computer program code. Alternatively, the control unit may comprise a general purpose processor and a non-transitory memory which stores computer program code, which code when executed by the processor causes the cutting arrangement to perform the cutting operations. The control unit may control all parts of the cutting stroke, e.g. frequency, length, speed, acceleration, by using different electrical signals.

The cutting tool may e.g. be a scrape, a heated electrical wire or an ultrasound cutting tool. The electrical actuator may be an electrical linear servo. A linear electrical servo may provide a high cutting speed and precise control over the cutting stroke.

According to a second aspect of the present invention, there is provided an ice cream machine comprising an extrusion nozzle having an orifice for extruding an ice cream mixture, and a cutting arrangement according to the first aspect, wherein the cutting tool of the cutting arrangement is arranged to cut the ice cream mixture from the extrusion nozzle orifice into ice cream products.

It is thus understood that the cutting arrangement is arranged downstream of the extrusion nozzle to cut the ice cream mixture which is extruded therefrom. The ice cream mixture may comprise inclusions. By downstream it should be understood that the reciprocating movement of the cutting tool may move the cutting tool in a direction which is essentially transversal to the flow direction of the ice cream mixture from the extrusion nozzle. Yet another advantage with the present invention is hereby realized in that the low backlash due to the low inertia and precise control allows the cutting tool to be operated closer to the extrusion nozzle. Thereby, the amount of ice cream mixture for each ice cream product may be reduced since the safety margin of the minimum acceptable amount of ice cream in an ice cream product may be reduced. This, of course, lowers the costs for the ice cream product manufacturer.

It should be understood that the ice cream mixture may be provided to the extrusion nozzle from some kind of delivering means, such as e.g. a pipe or a tank containing the ice cream mixture.

Effects and features of this second aspect of the present invention are largely analogous to those described above in connection with the first aspect of the inventive concept. Embodiments mentioned in relation to the first aspect of the present invention are largely compatible with the second aspect of the invention.

In at least one exemplary embodiment, the extrusion nozzle is a horizontally arranged extrusion nozzle adapted to extrude the ice cream mixture horizontally. In at least one exemplary embodiment the extrusion nozzle is a vertically arranged extrusion nozzle adapted to extrude the ice cream mixture vertically.

In at least one exemplary embodiment, the ice cream machine further comprises a conveyer arranged to receive the cut ice cream products.

According to third aspect of the present invention, the objectives are also at least partly achieved by a method for producing an ice cream product with the ice cream machine according to at least claim 7. The method comprises the steps of, providing an ice cream mixture, extruding the ice cream mixture through the extrusion nozzle, actuating an electrical actuator to generate a first movement of a cutting tool connected to the electrical actuator towards the extrusion nozzle, which first movement is at least partly transversally to the direction of the flow of the ice cream mixture from the extrusion nozzle, to cut the ice cream mixture with the cutting tool into an ice cream product, and actuating the electrical actuator to generate a second movement of the cutting tool, which second movement is at least partly transversally to the direction of the flow of the ice cream mixture from the extrusion nozzle, and which second movement is at least partly opposite the first movement.

The first and second movement should be understood as the two parts, e.g. extending and retracting part, of a reciprocating movement which is provided by actuating the electrical actuator. Hence, the second movement is essentially opposite the first movement and vice versa.

It should of course be noted that the ice cream mixture may optionally also be cut during the second movement. The first movement may be interpreted as providing a movement of the cutting tool towards the extrusion nozzle. For example, the first movement may extend the cutting tool towards the extrusion nozzle. The second movement may be interpreted as providing a movement away from the extrusion nozzle. For example, the second movement may retract the cutting tool from the extrusion nozzle.

The step of providing an ice cream mixture may comprise providing an ice cream mixture with or without inclusions.

According to the invention, the method further comprises the step of actuating a tilt actuator between the steps of actuating the electrical actuator, whereby the cutting tool is tilted away from the extrusion nozzle. In at least one exemplary embodiment, the method further comprises the step of actuating the tilt actuator after the steps of actuating the electrical actuator to generate the retracting movement, to tilt the cutting tool towards the extrusion nozzle.

In at least one exemplary embodiment, the steps of actuating the electrical actuator cuts the ice cream mixture in an essentially horizontally or vertically direction.

In at least one exemplary embodiment, the method comprises the step of arranging the extruded ice cream mixture or ice cream product on a conveyer. The conveyer may be either conveyer trays or a conveyer belt. Hence, the ice cream product can be further transported for e.g. further processing, packaging and storing. In embodiments where the ice cream mixture is extruded vertically, the ice cream products may fall under the force of gravity onto the conveyer after being cut into the intended shape. In embodiments where the ice cream is extruded horizontally, the ice cream mixture may be put on the conveyer tray prior to being cut into ice cream products. By being able to control all aspects of the cutting stroke, the ice cream products may be put on the conveyer in a more controllable and repeatable manner.

According to at least one example embodiment, the method comprises the step of inserting a stick into the ice cream mixture or ice cream product. For example, the stick may be inserted into the ice cream mixture during the process of extruding the ice cream mixture through the extrusion nozzle, e.g. through a notch in said extrusion nozzle. Hereby, an efficient way to introduce a stick into the ice cream is provided.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Figures 1a and 1b are schematic top views of a cutting arrangement for an ice cream machine in accordance with exemplary embodiments, which are not part of the invention;
Figures 2a and 2b are schematic side views of a cutting arrangement for an ice cream machine. Only the embodiment of figure 2b is part of the invention; and
Figure 3 is a flow-chart schematically illustrating at least one example embodiment of the invention.

### Detailed description of preferred embodiments of the invention

In the present detailed description, embodiments of a cutting arrangement for an ice cream machine according to the present invention are mainly discussed with reference to views only showing a cutting arrangement and an ice cream machine with components and portions being relevant in relation to various embodiments of the invention.

The cutting arrangement and ice cream machine according to the present invention is suitable for being installed in an industrial food production facility for producing ice cream products. When an ice cream mixture is extruded through and extrusion nozzle, a cutting arrangement is arranged to cut the ice cream being extruded from the extrusion nozzle into ice cream product which are then placed or allowed to fall under gravity onto a conveyer. The extrusion nozzle may have a cross-sectional shape corresponding to the desired shape of the ice cream product. It may be important that the ice cream products are arranged a regular controlled order onto the conveyer for further processes downstream. Misplacement, e.g. placement in an unintended manner may lead to a waste of ice cream products.

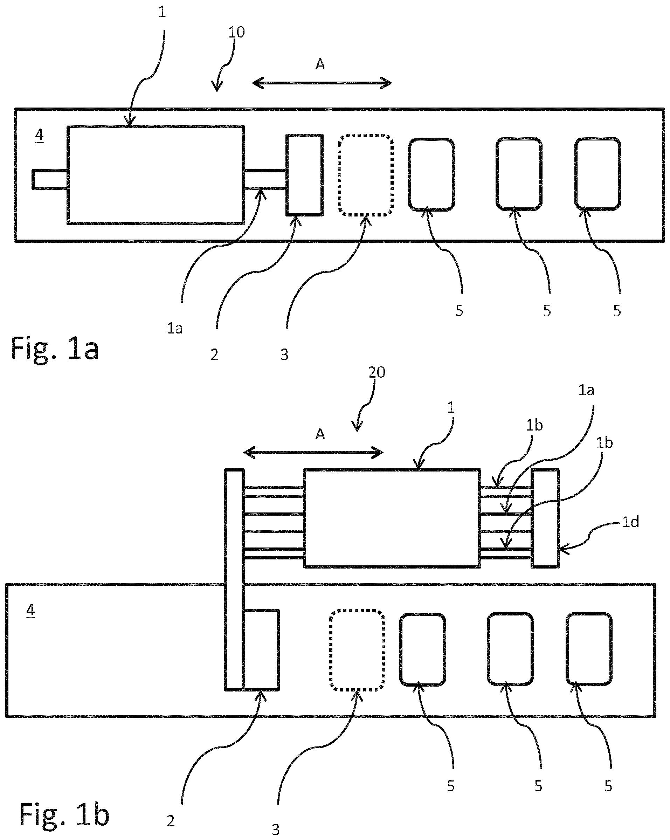

Figure 1a shows a top view of a cutting arrangement 10 in accordance with one embodiment of the present invention. The cutting arrangement 10 comprises an electrical actuator 1 and a cutting tool 2. The electrical actuator has a main driving shaft 1a. The cutting tool 2 is supported by and connected to the electrical actuator 1 via the main driving shaft 1a. The electrical actuator 1, during operation, provides a reciprocating movement of the main driving shaft 1a. The length and movement of the main driving shaft 1a is indicated by the double-headed arrow A. The length of a cutting stroke may be up to 390 mm. The reciprocating movement of the main driving shaft 1a thus causes the cutting tool 2 to cut ice cream into ice cream products 5.

The cutting tool 2 may be any type of cutting tool possible to use for cutting ice cream. Common types of cutting tools are scrapes, heated electrical wires, and ultrasonic cutting tools. The electrical actuator 1 may be a linear electrical servo. The linear electrical servo 1 may comprise driving means such as a motor, electrical circuitry for converting drive signals, and bearings. For some types of cutting tools, the cutting tool may comprise a cutting blade and a cutting blade holder. For example, in the case of a heated electrical wire, the cutting blade holder may be two prongs which hold the heated wire in between them, and the cutting blade is the heated wire. In the case of a scrape or the like, the cutting blade holder and cutting blade may be the same unit or two separate units, such that the scrape portion may be exchanged for a new cutting blade. In the case of an ultrasonic cutting tool, the cutting tool holder may comprise the support functions of the ultrasonic cutting blade which vibrates. It is understood that the cutting tool 2 is only schematically shown in the appended drawings.

The movement of the linear electrical servo 1 may be controlled by a control unit (not shown). The control unit may be further connected to different parts of the ice cream machine to control the linear servo 1 in conjunction with different types of recipes for ice cream products 5. Hence, it should be understood that by utilizing a cutting arrangement 10 having an electrical actuator, such as the electrical linear servo 1, all aspect of the cutting stroke may be controlled. The speed, acceleration, stroke length (indicated by arrow A) as well as profile may be defined for each type of ice cream product to be produced. The profile may for example be adapted depending on the type of ice cream in the ice cream mixture, e.g. the content of the ice cream mixture. The cutting stroke may thus be controlled by the control unit (not shown) which sends drive signals to the linear electrical servo 1.

Figure 1a also shows an ice cream machine comprising the aforementioned cutting arrangement 10, an extrusion nozzle 3 and a conveyer 4. The extrusion nozzle 3 is arranged to extrude an ice cream mixture through an orifice of the extrusion nozzle 3. The cutting tool 2 is arranged to cut the ice cream mixture extruded from the extrusion nozzle 3 into ice cream products 5.

Figure 1a is a top view, and the ice cream mixture is extruded vertically (or at least substantially vertically) and the cutting tool 2 is arranged to cut through the ice cream mixture in an essentially horizontal direction. After cutting the ice cream mixture into ice cream products 5, the ice cream products are put on a conveyer 4 for further transportation. There may also be conveyer trays (not shown) on the conveyer onto which the ice cream products 5 are arranged. Note that in figure 1a, the linear electrical servo 1 is arranged above the conveyer 4.

Figure 1b, shows a cutting arrangement 20 and ice cream machine similar to the embodiment shown in figure 1a, but with the differences that the cutting arrangement is arranged on the side of the conveyer 4. By arranging the cutting arrangement 20, and especially the electrical actuator 1 on the side of the conveyer 4, there is less risk that fluids, e.g. lubricants, leak onto the conveyer. This may instead be mitigated in the embodiment shown in figure 1a by a protection plate or the like under the electrical actuator 1.

The cutting arrangement 20 further comprises an elongated support member 6 which operatively connects the cutting tool 2 and the electrical actuator 1. The elongated support member 6 may be a rotatable element. The cutting tool 2 is thus supported by the electrical actuator via the elongated support member 6. The reciprocating movement generated by the electrical actuator 1, during operation, is thus transferred to the cutting tool 2 via the elongated support member 6.

The cutting arrangement 20 is arranged such that the cutting tool 2 may cut the ice cream extruded by the extrusion nozzle 3 downstream of the extrusion nozzle 3. Figure 1b is also a top view, and the ice cream mixture is extruded vertically (or at least substantially vertically) and the cutting tool 2 is arranged to cut through the ice cream mixture in an essentially horizontal direction. After cutting the ice cream mixture into ice cream products 5, the ice cream products are put on a conveyer 4 for further transportation. There may also be conveyer trays (not shown) on the conveyer onto which the ice cream products 5 are arranged.

The electrical actuator 1 shown in figure 1b may also be a linear electrical servo. The linear electrical servo 1 comprises a main driving shaft 1a, and at least one guiding shaft 1b, 1c. Herein, two guiding shafts 1b, 1c are shown. The guiding shafts 1b, 1c prevents the rotation around the main driving shaft and support portions of the load exerted onto the main driving shaft, e.g. the torque and force applied by the weight and movement of the elongated support member 6 and the cutting tool 2. The electrical linear servo 1 may also comprise a counter-weight 1d for reducing the torque applied to the linear electrical servo 1 during the reciprocating movement. The description of the linear electrical servo 1 may also be valid for the linear electrical servo 1 shown in figure 1.

Figure 1b also shows an ice cream machine comprising the aforementioned cutting arrangement 20, an extrusion nozzle 3 and a conveyer 4. The extrusion nozzle 3 is arranged to extrude an ice cream mixture through an orifice of the extrusion nozzle 3. The cutting tool 2 is arranged to cut the ice cream mixture extruded from the extrusion nozzle 3 into ice cream products 5.

Figure 1b is a top view, and the ice cream mixture is extruded vertically (or at least substantially vertically) and the cutting tool 2 is arranged to cut through the ice cream mixture in an essentially horizontal direction, e.g. transversal to the flow of the ice cream mixture from the extrusion nozzle. After cutting the ice cream mixture into ice cream products 5, the ice cream products are put on a conveyer 4 for further transportation. There may also be conveyer trays (not shown) on the conveyer onto which the ice cream products 5 are arranged.

In both figures 1a and 1b, the cutting arrangement 10, 20 may be arranged to cut through the ice cream mixture during both the extending and retracting portion of the reciprocating movement of the electrical linear servo 1. Alternatively, the cutting arrangement 10, 20 may be arranged to only cut through the ice cream mixture during the portion of the reciprocating movement which brings the cutting tool 2 towards the extrusion nozzle 3.

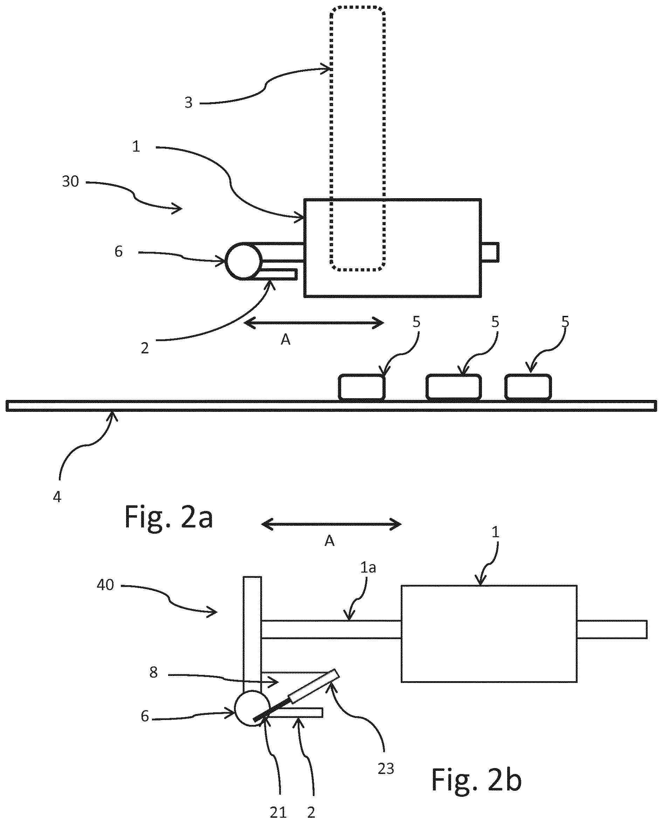

Figure 2a and 2b, shows side views of cutting arrangements 30, 40 for ice cream machines according to further embodiments of the invention where the cutting arrangements 30, 40 further comprises a rotatable element 6 and a tilt actuator 23 operatively connected to the rotatable element 6 for tilting the cutting tool 2. This means that an ice cream mixture may be continously extruded through the extrusion nozzle 3, and the tilt actuator 23 rotates the rotatable element 6 to which the cutting tool 2 is actuated in order to tilt the cutting tool 2. Thereby, the cutting tool 2 may only cut the ice cream mixture into ice cream products 5 during one part of the reciprocating movement.

In figure 2a, the cutting arrangement further comprises a rotatable element to which the cutting tool 2 is connected. The rotatable element 6 is connected to the linear electrical servo 1 via the main driving shaft 1a. The cutting arrangement further comprises a tilt actuator (not shown) which is operatively connected to the rotatable element for tilting the rotatable element 6 during operaton and thus the cutting tool 2. The tilt acturator may be an electrical motor mounted internal or external of the rotatable element 6. During operation, the tilt actuator controls the tilt of the cutting tool 2, such that the cutting tool 2 is moved away from the extrusion nozzle during the portion of the reciprocating movement which brings the cutting tool 2 further away from the extrusion nozzle to prevent the ice cream mixture from being cut on the return stroke (e.g. in the case of the cutting tool being a heated wire), or from sticking to the top of the cutting tool 2 in the case the cutting tool 2 is a scrape or ultrasonic cutting tool.

Figure 2b shows an alternative embodiment further comprises a rotatable element 6 connected to a plate 8 which in turn is attached to the main driving shaft 1a of the electrical actuator 1. The rotation of the rotatable element 6 is controlled by a tilt actuator 23, attached to the plate 8, which has an actuating rod 21. The tilt actuator may be a pneumatic cylinder as shown in figure 2b. The actuation of the penumatic cylinder 23 may be controlled by a solenoid valve (not shown) controlled by a control unit (not shown). The pneumatic cylinder comprises an acutating rod 21 which is connected to the rotatable element 6 in order to control the rotation of the rotatable element and thus the tilt of the cutting tool 2. The actuating rod 21 may be connected off center of the rotatable element 6 in order for a reciprocating movement of the actuating rod 21 to rotatate the rotatable element 6. Alternatively, the actuating rod may be connected to a lever or the like connected to the rotatable element 6 (not shown).

The rotatable element 6, for the embodiments shown in both figure 2a and 2b, may be an elongated element, such as a shaft 6 or another type of elongated support element. The shaft 6 may enable the electric actuator to be placed to the side of the conveyer as shown in figure 1b.

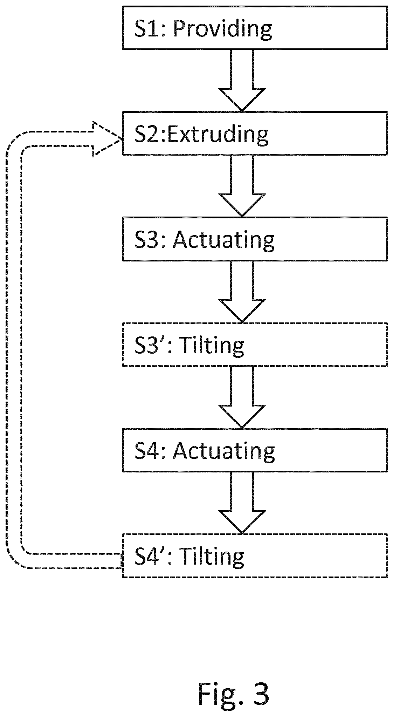

Figure 3 shows a flow-chart which schematically illustrates a method method for producing an ice cream product with an ice cream machine having an extrusion nozzle and a cutting arrangement. The cutting arrangement may be, but need not, be any of the cutting arrangements described in the previous drawings. Likewise, the ice cream machine may be but need not, be any of the ice cream machines described in the previous drawings. Therefore, the reference numerals used in figure 1b, 2a and 2b are used below when describing the steps of the method in the flow-chart in figure 3.

In a first step S1, an ice cream mixture with or without inclusions is provided. The ice cream mixture may be provided to the extrusion nozzle from some kind of delivering means, such as e.g. a pipe or a tank containing the ice cream mixture.

In a subsequent step S2, the ice cream mixture is extruded through an extrusion nozzle 3. The extrusion nozzle 3 typically has a cross-sectional shape corresponding to the desired shape of the ice cream product 5.

Step S2 can be carried out by extruding the ice cream mixture horizontally or by extruding the ice cream mixture vertically. Prior to step S2, a stick may optionally be inserted into the ice cream mixture. As an alternative example embodiment, a stick may optionally be inserted into the ice cream mixture or ice cream product subsequently to step S2.

In a subsequent step S3 the ice cream mixture extruded from the extrusion nozzle 3 is cut with the cutting tool 2 into ice cream products 5 by actuating the linear electrical servo in order to generate a first movement of the cutting tool 2 towards the extrusion nozzle 3. The first movement is at least partly transversally to the direction of the flow of the ice cream mixture from the extrusion nozzle, i.e. in the horizontal direction to cut the ice cream mixture with the cutting tool 2 into an ice cream product 5. Step S3 can be carried out by cutting the ice cream mixture in an essentially horizontally direction. Alternatively, Step S3 can be carried out by cutting the ice cream mixture in an essentially vertical direction (not shown).

Subsequently, an optional step S3' of tilting the cutting tool 2 such that the cutting tool is moved further from the extrusion nozzle may be performed utilizing a tilt actuator as described in conjunction with figure 2a and 2b.

The next step, S4, comprises actuating the electrical actuator 1 to generate a second movement of the cutting tool 2, the second movement being opposite, or mainly opposite, to the first movement performed during step S3. The second movement may thus complete the reciprocating movement of the eletrical actuator 1.

Subsequently, an optional step S4' of tilting the cutting tool 2 back to a cutting position, e.g. a horizontal position, performed. This action may be perfomed by actuating the tilt actuator as described in conjunticon with figure 2a and 2b. Alternatively, an elastic member such as a spring may be used to bias the cutting tool 2 back to a cutting position.

The steps S2-S4 are then repeated until a desired number of ice cream products 5 have been cut and placed on the conveyer.

In other words, the method may also comprise the step (not shown) of arranging the extruded ice cream mixture or ice cream product 5 on a conveyer 4. Hence, the ice cream product can be further transported for e.g. further processing, packaging and storing. In embodiments where the ice cream mixture is extruded vertically, the ice cream products may fall under the force of gravity onto the conveyer after being cut into the intended shape. In embodiments where the ice cream is extruded horizontally, the ice cream mixture may be put on the conveyer tray prior to being cut into ice cream products. By being able to control all aspects of the cutting stroke, the ice cream products may be put on the conveyer in a more controllable and repeatable manner.

In the above description the cutting tool 2 is arranged to cut through the ice cream mixture in an essentially horizontal position. However, it is of course possible to tilt the cutting tool 2 as the cutting is being performed. For example, the cutting tool may be angled between 0° and 12°, preferably between 4° and 10° as seen from an axis normal to the flow direction of the ice cream mixture.

The ice cream mixture may comprise inclusions or particles. The inclusions may e.g. be hard inclusions such as hazelnuts or pieces of candy having a diameter of around 8 mm, and/or medium hard inclusions such as e.g. hazelnut flakes or candy pieces having a diameter of around 15 mm, and/or soft inclusions such as e.g. pieces of fruit or berries having a diameter of around 22 mm. The inclusion may have another particle size and be of another particle hardness than the ones described here. For example, the inclusions may have a diameter in the range of 5-25 mm.

It is of course understood that variations to the shown embodiment may be effected and still be within the scope of the invention, for example tilt actuator may be controlled, actuated or operated using pneumatic, electric or hydraulic means.

The cutting arrangement and/or ice cream machine may further comprise sensor and detectors for ensuring that the operations are performed correctly. For example, the position of the main driving shaft and the rotatable element may be detected. These sensors and detectors may be coupled to the control unit. Thereby, operation may be halted if a malfunction is detected. The control unit may further comprise a human-machine-interface, or be connected via a wired or wireless network for receiving instructions or adapting the operation of the cutting arrangement and/or the ice cream machine to another type or variant of ice cream mixture or ice cream product.

## Claims

1. A cutting arrangement (40) for an ice cream machine, the cutting arrangement (40) comprising:
a cutting tool (2); and
an electrical actuator (1) connected to and supporting the cutting tool (2), the electrical actuator (1) being arranged to generate a reciprocating movement of the cutting tool (2) in order for the cutting tool (2) to cut ice cream into ice cream products (5), **characterized in that**
the cutting arrangement (40) further comprises a rotatable element (6) arranged between the cutting tool (2) and the electrical actuator (1), and wherein the cutting arrangement (40) further comprises a tilt actuator (23) operatively connected to the rotatable element (6) for tilting the cutting tool (2).

2. A cutting arrangement according to claim 1, wherein the tilt actuator (23) comprises an actuating rod (21), wherein the actuating rod (21) is operatively connected to the rotatable element (6).

3. A cutting arrangement according to claim 1 or 2, wherein said tilt actuator (23) is a pneumatically driven tilt actuator (23) or a small linear servo driven actuator.

4. A cutting arrangement according to any one of the preceding claims, wherein the electrical actuator (1) comprises a main driving shaft (1a), and further comprising at least one guiding shaft (1b, 1c) arranged in parallel with the main driving shaft (1a) for preventing at least rotational movement about the main driving shaft (1a).

5. A cutting arrangement according to any one of the preceding claims, further comprising a control unit for controlling the reciprocating movement of the electrical actuator (1) and/or the tilt actuator (23).

6. A cutting arrangement according to any one of the preceding claims, wherein the cutting tool (2) is a scrape, a heated electrical wire or an ultrasound cutting tool (2).

7. An ice cream machine comprising:
an extrusion nozzle having an orifice for extruding an ice cream mixture;
a cutting arrangement (40) according to any one of the preceding claims, wherein the cutting tool (2) of the cutting arrangement (40) is arranged to cut the ice cream mixture from the extrusion nozzle orifice into ice cream products.

8. The ice cream machine according claim 7, wherein the extrusion nozzle is a horizontally arranged extrusion nozzle adapted to extrude the ice cream mixture horizontally or wherein the extrusion nozzle is a vertically arranged extrusion nozzle adapted to extrude the ice cream mixture vertically.

9. The ice cream machine according to claim 7 or 8, further comprising a conveyer arranged to receive the cut ice cream products.

10. A method for producing an ice cream product with an ice cream machine according to any one of claims 7-9, the method comprising:
providing an ice cream mixture;
extruding the ice cream mixture through the extrusion nozzle;
actuating the electrical actuator (1) to generate a first movement of the cutting tool (2) connected to the electrical actuator (1) towards the extrusion nozzle, which first movement is at least partly transversally to the direction of the flow of the ice cream mixture from the extrusion nozzle, to cut the ice cream mixture with the cutting tool (2) into an ice cream product (5);
actuating the electrical actuator (1) to generate a second movement of the cutting tool (2), which second movement is at least partly transversally to the direction of the flow of the ice cream mixture from the extrusion nozzle, and which second movement is at least partly opposite the first movement; and
actuating the tilt actuator (23) between the steps of actuating the electrical actuator (1), whereby the cutting tool (2) is tilted away from the extrusion nozzle.

11. The method according to claim 10, wherein the steps of actuating the electrical actuator (1) cuts the ice cream mixture in an essentially horizontally or vertically direction.

12. The method according to claim 10 or 11, comprising the step of arranging the extruded ice cream mixture or ice cream product on a conveyer.

## Patentansprüche

1. Schneidanordnung (40) für eine Speiseeismaschine, wobei die Schneidanordnung (40) Folgendes umfasst:
ein Schneidwerkzeug (2); und
einen elektrischen Aktuator (1), der mit dem Schneidwerkzeug (2) verbunden ist und dieses stützt, wobei der elektrische Aktuator (1) angeordnet ist, um eine Hin- und Herbewegung des Schneidwerkzeugs (2) zu erzeugen, damit das Schneidwerkzeug (2) Speiseeis in Speiseeisprodukte (5) schneidet, **dadurch gekennzeichnet, dass**
die Schneidanordnung (40) ferner ein drehbares Element (6) umfasst, das zwischen dem Schneidwerkzeug (2) und dem elektrischen Aktuator (1) angeordnet ist, und wobei die Schneidanordnung (40) ferner einen Neigungsaktuator (23), der mit dem drehbaren Element (6) wirkgekoppelt ist, zum Neigen des Schneidwerkzeugs (2) umfasst.

2. Schneidanordnung nach Anspruch 1, wobei der Neigungsaktuator (23) eine Betätigungsstange (21) umfasst, wobei die Betätigungsstange (21) mit dem drehbaren Element (6) wirkverbunden ist.

3. Schneidanordnung nach Anspruch 1 oder 2, wobei der Neigungsaktuator (23) ein pneumatisch angetriebener Neigungsaktuator (23) oder ein kleiner linearer servoangetriebener Aktuator ist.

4. Schneidanordnung nach einem der vorhergehenden Ansprüche, wobei der elektrische Aktuator (1) eine Hauptantriebswelle (1a) umfasst, und ferner umfassend zumindest eine Führungswelle (1b, 1c), parallel mit der Hauptantriebswelle (1a) angeordnet, um zumindest Drehbewegung um die Hauptantriebswelle (1a) zu verhindern.

5. Schneidanordnung nach einem der vorhergehenden Ansprüche, ferner umfassend eine Steuereinheit zum Steuern der Hin- und Herbewegung des elektrischen Aktuators (1) und/oder des Neigungsaktuators (23).

6. Schneidanordnung nach einem der vorhergehenden Ansprüche, wobei das Schneidwerkzeug (2) ein Kratzer, ein beheizter elektrischer Draht oder ein Ultraschallschneidwerkzeug (2) ist.

7. Speiseeismaschine, die Folgendes umfasst:
eine Extrudierdüse mit einer Öffnung zum Extrudieren einer Speiseeismischung;
eine Schneidanordnung (40) nach einem der vorhergehenden Ansprüche, wobei das Schneidwerkzeug (2) der Schneidanordnung (40) angeordnet ist, um die Speiseeismischung aus der Extrudierdüsenöffnung in Speiseeisprodukte zu schneiden.

8. Speiseeismaschine nach Anspruch 7, wobei die Extrudierdüse eine horizontal angeordnete Extrudierdüse ist, die dazu angepasst ist, die Speiseeismischung horizontal zu extrudieren, oder wobei die Extrudierdüse eine vertikal angeordnete Extrudierdüse ist, die dazu angepasst ist, die Speiseeismischung vertikal zu extrudieren.

9. Speiseeismaschine nach Anspruch 7 oder 8, ferner umfassend einen Förderer, der dazu angeordnet ist, die geschnittenen Speiseeisprodukte aufzunehmen.

10. Verfahren zur Herstellung eines Speiseeisprodukts mit einer Speiseeismaschine nach einem der Ansprüche 7-9, wobei das Verfahren Folgendes umfasst:
Bereitstellen einer Speiseeismischung;
Extrudieren der Speiseeismischung durch die Extrudierdüse;
Betätigen des elektrischen Aktuators (1) zum Erzeugen einer ersten Bewegung des mit dem elektrischen Aktuator (1) verbundenen Schneidwerkzeugs (2) in Richtung der Extrudierdüse, wobei die erste Bewegung zumindest teilweise quer zur Fließrichtung der Speiseeismischung aus der Extrudierdüse ist, um die Speiseeismischung mit dem Schneidwerkzeug (2) in ein Speiseeisprodukt (5) zu schneiden;
Betätigen des elektrischen Aktuators (1) zum Erzeugen einer zweiten Bewegung des Schneidwerkzeugs (2), wobei die zweite Bewegung zumindest teilweise quer zur Fließrichtung der Speiseeismischung aus der Extrudierdüse ist, und wobei die zweite Bewegung zumindest teilweise der ersten Bewegung entgegengesetzt ist; und
Betätigen des Neigungsaktuators (23) zwischen den Schritten des Betätigens des elektrischen Aktuators (1), wobei das Schneidwerkzeug (2) von der Extrudierdüse weg geneigt wird.

11. Verfahren nach Anspruch 10, wobei die Schritte des Betätigens des elektrischen Aktuators (1) die Speiseeismischung in eine im Wesentlichen horizontale oder vertikale Richtung schneiden.

12. Verfahren nach Anspruch 10 oder 11, umfassend den Schritt des Anordnens der extrudierten Speiseeismischung oder des Speiseeisprodukts auf einem Förderer.

## Revendications

1. Agencement de coupe (40) pour une machine à crème glacée, l'agencement de coupe (40) comprenant :
un outil de coupe (2) ; et
un actionneur électrique (1) raccordé à et supportant l'outil de coupe (2), l'actionneur électrique (1) étant agencé pour générer un mouvement en va-et-vient de l'outil de coupe (2) afin que l'outil de coupe (2) coupe de la crème glacée en produits de crème glacée (5),
**caractérisé en ce que**
l'agencement de coupe (40) comprend en outre un élément rotatif (6) agencé entre l'outil de coupe (2) et l'actionneur électrique (1), et dans lequel l'agencement de coupe (40) comprend en outre un actionneur d'inclinaison (23) fonctionnellement raccordé à l'élément rotatif (6) pour incliner l'outil de coupe (2).

2. Agencement de coupe selon la revendication 1, dans lequel l'actionneur d'inclinaison (23) comprend une tige d'actionnement (21), dans lequel la tige d'actionnement (21) est fonctionnellement raccordée à l'élément rotatif (6).

3. Agencement de coupe selon la revendication 1 ou 2, dans lequel ledit actionneur d'inclinaison (23) est un actionneur d'inclinaison entraîné pneumatiquement (23) ou un petit actionneur linéaire servo-entraîné.

4. Agencement de coupe selon l'une quelconque des revendications précédentes, dans lequel l'actionneur électrique (1) comprend un arbre d'entraînement principal (1a), et comprenant en outre au moins un arbre de guidage (1b, 1c) agencé en parallèle avec l'arbre d'entraînement principal (1a) pour empêcher au moins un mouvement de rotation autour de l'arbre d'entraînement principal (1a).

5. Agencement de coupe selon l'une quelconque des revendications précédentes, comprenant en outre une unité de commande pour commander le mouvement en va-et-vient de l'actionneur électrique (1) et/ou de l'actionneur d'inclinaison (23).

6. Agencement de coupe selon l'une quelconque des revendications précédentes, dans lequel l'outil de coupe (2) est une racle, un fil électriquement chauffé ou un outil de coupe à ultrasons (2).

7. Machine à crème glacée, comprenant :
une buse d'extrusion ayant un orifice pour extruder une crème glacée mélange ;
un agencement de coupe (40) selon l'une quelconque des revendications précédentes, dans lequel l'outil de coupe (2) de l'agencement de coupe (40) est agencé pour couper le mélange de crème glacée à partir de l'orifice de buse d'extrusion en produits de crème glacée.

8. Machine à crème glacée selon la revendication 7, dans lequel la buse d'extrusion est une buse d'extrusion horizontalement agencée adaptée pour extruder le mélange de crème glacée horizontalement ou dans lequel la buse d'extrusion est une buse d'extrusion verticalement agencée adaptée pour extruder le mélange de crème glacée verticalement.

9. Machine à crème glacée selon la revendication 7 ou 8, comprenant en outre un transporteur agencé pour recevoir les produits coupés de crème glacée.

10. Procédé pour produire un produit de crème glacée avec une machine à crème glacée selon l'une quelconque des revendications 7 à 9, le procédé comprenant :
la fourniture d'un mélange de crème glacée ;
l'extrusion du mélange de crème glacée à travers la buse d'extrusion ;
l'actionnement de l'actionneur électrique (1) pour générer un premier mouvement de l'outil de coupe (2) raccordé à l'actionneur électrique (1) vers la buse d'extrusion, lequel premier mouvement est au moins partiellement transversal à la direction de l'écoulement du mélange de crème glacée à partir de la buse d'extrusion, pour couper le mélange de crème glacée avec l'outil de coupe (2) en un produit de crème glacée (5) ;
l'actionnement de l'actionneur électrique (1) pour générer un second mouvement de l'outil de coupe (2), lequel second mouvement est au moins partiellement transversal à la direction de l'écoulement du mélange de crème glacée à partir de la buse d'extrusion, et lequel second mouvement est au moins partiellement opposé au premier mouvement ; et
l'actionnement de l'actionneur d'inclinaison (23) entre les étapes de l'actionnement de l'actionneur électrique (1), moyennant quoi l'outil de coupe (2) est incliné de façon éloignée de la buse d'extrusion.

11. Procédé selon la revendication 10, dans lequel les étapes de l'actionnement de l'actionneur électrique (1) coupe le mélange de crème glacée dans une direction essentiellement horizontale ou verticale.

12. Procédé selon la revendication 10 ou 11, comprenant l'étape de l'agencement du mélange de crème glacée extrudé ou produit de crème glacée sur un transporteur.
